Europäisches Patentamt

**European Patent Office**

**Office européen des brevets**

(11) Numéro de publication : **0 018 290**
**B1**

(12) **FASCICULE DE BREVET EUROPÉEN**

(45) Date de publication du fascicule du brevet :
03.11.82

(21) Numéro de dépôt : 80400526.2

(22) Date de dépôt : 18.04.80

(51) Int. Cl.³ : **G 21 C 17/06, G 01 N 29/04**

(54) **Procédé de contrôle de crayons combustibles destinés à des assemblages pour réacteur nucléaire et dispositif correspondant.**

(30) Priorité : 20.04.79 FR 7909984

(43) Date de publication de la demande :
29.10.80 (Bulletin 80/22)

(45) Mention de la délivrance du brevet :
03.11.82 Bulletin 82/44

(84) Etats contractants désignés :
BE DE GB IT SE

(56) Documents cités :
FR A 2 315 749
FR A 2 325 932
FR A 2 341 182
FR A 2 341 183
US A 2 912 854
US A 3 233 449

Le rapport de D.C. WORLTON : « Applications of Lamb waves in ultrasonic testing » Présente au « Symposium of nondestructive tests in the field of nuclear energy » Chicago, april 1957, Philadelphia 1958 (A.S.T.M. special technical publication, no. 223), pages 260-265

ULTRASONICS, Vol. 11, no 1, janvier 1973 T.K. LOCKETT : « Lamb and torsional waves and their use in flaw detection in tubes », pages 31-37.

(73) Titulaire : **Framatome**
**Tour Fiat 1 place de la Coupole**
**F-92400 Courbevoie (FR)**

(72) Inventeur : **Weilbacher, Jean-Claude**
**10 rue des Chataigners**
**F-95660 Champagne-sur-Oise (FR)**
Inventeur : **Marini, Jean**
**Chemin du Bois Martin**
**F-78160 Marly Le Roi (FR)**

(74) Mandataire : **Bouget, Lucien et al**
**CREUSOT-LOIRE 15 rue Pasquier**
**F-75383 Paris Cedex 08 (FR)**

Imprimerie Jouve, 18, rue St-Denis, 75001 Paris, France

# Procédé de contrôle de crayons combustibles destinés à des assemblages pour réacteur nucléaire et dispositif correspondant

L'invention concerne un procédé de contrôle de crayons combustibles destinés à des assemblages pour réacteur nucléaire, obtenus par introduction de combustible dans une gaine tubulaire, remplissage par un gaz sous pression et obturation de cette gaine, ce procédé visant à déceler des traces d'humidité introduites éventuellement dans le crayon pendant sa fabrication. L'invention concerne également un dispositif pour la mise en œuvre de ce procédé de contrôle des crayons combustibles.

Lors de la fabrication des crayons combustibles destinés à constituer des assemblages pour réacteur nucléaire, en particulier pour des réacteurs nucléaires à eau sous pression, on introduit des pastilles de combustible dans un tube métallique appelé gaine et l'on obture ce tube à chacune de ses extrémités par des bouchons soudés de façon étanche aux extrémités du tube après avoir évacué l'air de l'intérieur du tube et introduit de l'hélium sous une pression suffisante.

Le crayon combustible obturé renferme donc un gaz inerte sous pression qui reste à l'intérieur du gainage pendant toute la durée de vie du crayon combustible. On évite ainsi la présence à l'intérieur du crayon combustible de matières agressives à l'égard du combustible nucléaire ou du matériau de gainage ou encore de matières susceptibles de subir des réactions nucléaires conduisant à la production de produits radio-actifs dangereux.

Les crayons combustibles sont assemblés sous forme de faisceaux parallèles grâce à des structures de liaison permettant la constitution des assemblages qui seront introduits dans le cœur du réacteur nucléaire. Si de l'humidité a été introduite à l'intérieur du crayon combustible pendant sa fabrication, le gainage de ce crayon est susceptible d'être hydruré pendant le fonctionnement du réacteur.

Il est donc extrêmement important de vérifier, avant l'assemblage des crayons combustibles, que ces crayons ne renferment pas la moindre trace d'humidité ou d'eau.

Ce contrôle doit se faire de l'extérieur d'un crayon combustible obturé de façon étanche et avec une très bonne sensibilité.

On connaît d'autre part des procédés permettant de détecter, à l'intérieur d'un assemblage combustible, des crayons combustibles défectueux, c'est à dire dont le gainage comporte des fissures qui peuvent provoquer la sortie de produits radio-actifs dans le fluide réfrigérant du réacteur nucléaire.

La détection et la location de ces crayons combustibles défectueux à l'intérieur des assemblages permet leur remplacement et l'utilisation ultérieure de l'assemblage dont on a remplacé les crayons défectueux.

On a proposé, pour la détection de ces crayons combustibles défectueux, des méthodes utilisant la propagation d'ultra-sons dans la gaine du crayon combustible et la mesure de l'atténuation des ultra-sons pouvant provenir de la présence de défauts dans le matériau de gainage. Ce contrôle est effectué sur des assemblages usagés ayant séjourné dans le cœur du réacteur pendant une certaine période de fonctionnement et les défauts détectés par l'atténuation des ultra-sons sont constitués par des ruptures de gaine introduisant un facteur d'atténuation important (FR-A-2 341 183).

L'introduction de l'eau de réfrigération à l'intérieur des crayons combustibles provoque également une atténuation du signal ultra-sonore extrêmement sensible à cause des quantités d'eau relativement importantes introduites dans le crayon combustible par les fissures de son gainage.

On connaît également un procédé de repérage des crayons combustibles défectueux où l'on chauffe les gaines des barreaux combustibles au voisinage d'un bouchon afin que, lorsque l'on est en présence d'un crayon défectueux, l'humidité qui se trouve à l'intérieur de ce crayon se vaporise et provoque la formation de bulles de vapeur ou de gouttes de condensation qui peuvent être détectées au niveau du bouchon à l'aide d'un contrôle ultra-sonore par écho (FR-A-2 341 182).

Dans tous ces procédés de détection de crayons combustibles défectueux à l'intérieur d'assemblages usagés, la propagation des ultra-sons dans la gaine de l'élément combustible se fait à partir d'une zone accessible du crayon combustible dans l'assemblage, c'est-à-dire à partir du bouchon de cet élément combustible ou de la zone immédiatement voisine du bouchon. En effet, le reste du crayon combustible n'est pas accessible sur l'assemblage dont on a démonté les plaques d'extrémité sauf en ce qui concerne les crayons combustibles disposés à la périphérie de l'assemblage.

D'autre part ces contrôles doivent se faire sur l'assemblage immergé à l'intérieur de la piscine du réacteur puisqu'il s'agit d'assemblage ayant subi un certain séjour dans le cœur du réacteur nucléaire.

Pour toutes ces raisons, les méthodes de contrôle ultra-sonique utilisées jusqu'ici pour la détection des crayons combustibles ne sont pas transposables au cas du contrôle de très faibles traces d'humidité dans des crayons combustibles neufs dont la gaine ne présente pas de fissures ou d'autres défauts importants.

On connaît également un procédé de contrôle de tubes de générateur de vapeur qui utilise la propagation d'ondes ultra-sonores engendrées par la réflexion des ultra-sons sur la paroi de ces tubes minces, appelées « ondes de plaques » ou « ondes de Lamb ». Ces ondes de Lamb subissent une atténuation lorsqu'elles rencontrent un défaut tel qu'une fissure ou un trait de scie dans la paroi tubulaire.

Le but de l'invention est donc de proposer un procédé de contrôle de crayons combustibles neufs destinés à des assemblages pour réacteur nucléaire, obtenus par introduction du combustible dans une gaine tubulaire, remplissage par du gaz sous pression et obturation de cette gaine par des bouchons fixés de façon étanche à la gaine et constituant les extrémités du crayon combustible, pour déceler les traces d'humidité introduites éventuellement dans le crayon pendant sa fabrication, ce procédé devant permettre la détection de quantités extrêmement faibles d'humidité à l'intérieur du crayon et une exploration de toute la longueur de ce crayon combustible.

Dans ce but, pour la mise en œuvre du procédé suivant l'invention, on émet, dans le tube de gainage de l'élément combustible disposé à l'air libre, des ondes ultra-sonores avec une incidence oblique par rapport à l'axe du tube, à partir d'une zone de la paroi latérale du tube, ces ondes produisant, par réflexion sur les parois du tube de gainage, des ondes de plaques ou ondes Lamb ; on capte ces ondes de Lamb après un certain parcours suivant la longueur du tube de gainage et on mesure l'atténuation subie par ces ondes de Lamb pour en déduire, par comparaison avec des résultats d'atténuation obtenus sur une autre partie de la longueur du tube ou sur une tube étalon, une information sur la présence éventuelle d'humidité dans le crayon combustible.

Dans le but de bien faire comprendre l'invention, on va maintenant décrire à titre d'exemples non limitatifs, plusieurs modes de réalisation du procédé suivant l'invention mettant en œuvre des montages différents des dispositifs d'émission et de réception des ondes ultra-sonores.

La figure 1 représente, dans une vue en coupe, l'extrémité d'un crayon combustible sur laquelle on a placé un dispositif émetteur et récepteur d'ultra-sons pour la mise en œuvre du procédé suivant l'invention.

La figure 2 représente à plus grande échelle et dans une vue en coupe la zone voisine du bouchon d'un crayon combustible sur laquelle a été adapté un dispositif émetteur et récepteur d'ultra-sons permettant la mise en œuvre du procédé suivant l'invention.

La figure 3 représente les variations de l'atténuation des ondes de Lamb dans la gaine d'un crayon combustible, en fonction de la quantité d'eau résiduelle à l'intérieur du crayon combustible.

La figure 4 représente, dans une vue en coupe, un crayon combustible sur lequel ont été montés deux dispositifs à ultra-sons, l'un émetteur, l'autre récepteur.

La figure 5 représente, dans une vue en coupe, un crayon combustible sur lequel ont été montés deux dispositifs émetteur et récepteur d'ultra-sons pour la mise en œuvre du procédé suivant l'invention.

La figure 6 représente une variante du dispositif avec deux émetteurs récepteurs d'ultra-sons.

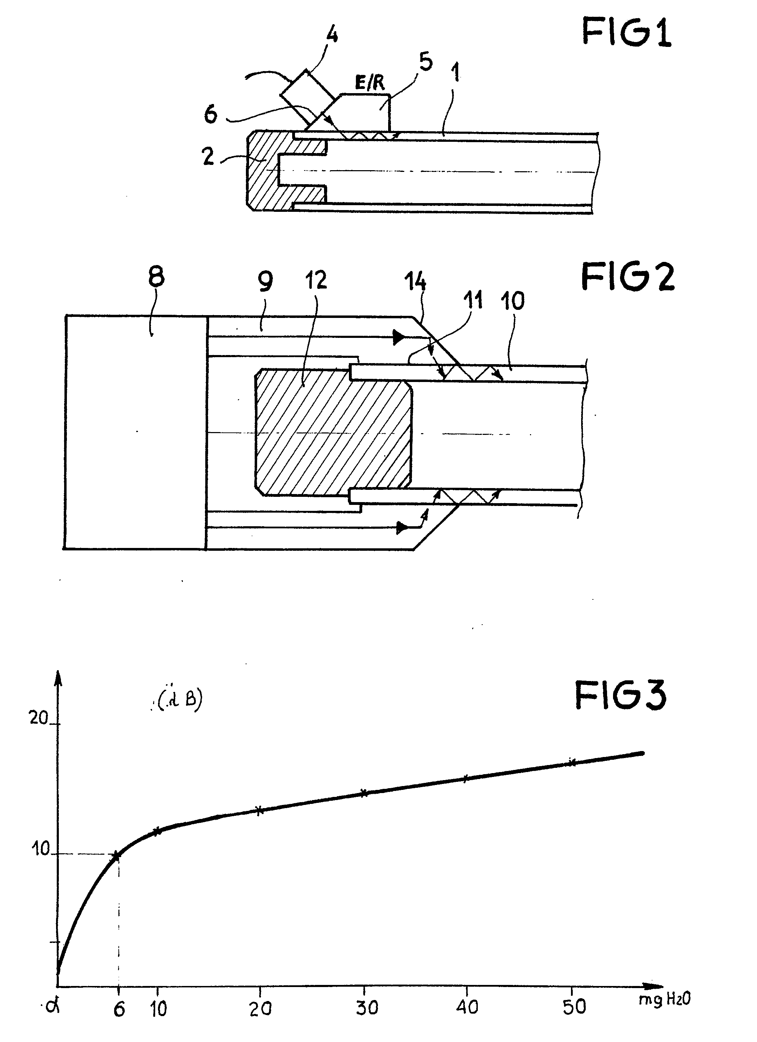

On voit sur la figure 1 l'extrémité d'un crayon combustible comportant une gaine 1 fermée par un bouchon 2 soudé sur l'extrémité de la gaine tubulaire 1, la gaine tubulaire renfermant des pastilles de combustible nucléaire non représentées et de l'hélium assurant une pressurisation convenable du crayon combustible.

Le dispositif d'émission et de réception des ultra-sons comporte un émetteur-récepteur 4 et une cale en plexiglas 5 accolée par sa face 6 inclinée de 45° par rapport à l'axe du crayon combustible à la face d'émission et de réception du transducteur 4.

La cale de plexiglas assure un bon couplage entre le transducteur et le tube de gainage 1 et pour cela présente un évidement cylindrique sur sa face d'appui en contact avec le tube de gainage 1.

Les ondes ultra-sonores émises par le transducteur 4 sont envoyées grâce à la cale de plexiglas dans le tube de gainage 1 avec un angle d'incidence voisin de 45° par rapport à l'axe du tube.

De cette façon les ondes ultra-sonores émises dans la paroi latérale du tube de gainage 1 n'interfèrent pas avec le bouchon 2 et donnent naissance par réflexion sur la surface interne et la surface externe du tube 1 à des ondes de plaques ou ondes de Lamb qui se propagent suivant la direction axiale du tube dans toute la surface latérale de ce tube. Le mode préférentiel généralement engendré est le mode $S_0$.

Le transducteur 4 et la cale 5 sont choisis de façon à émettre et à recevoir de façon préférentielle un mode d'ondes de Lamb qui permet une propagation dans le tube avec une atténuation faible et des signaux parasites négligeables dans le cas d'un tube ne présentant pas de défaut et d'humidité.

On voit sur la figure 2 une variante d'exécution de la pièce de liaison en plexiglas permettant d'engendrer dans la gaine du crayon combustible des ondes dont l'angle d'incidence est voisin de 45°, cette pièce entourant la surface externe de la gaine du crayon combustible à l'une de ses extrémités.

Dans le montage représenté à la figure 2, le dispositif émetteur et récepteur d'ultra-sons 8 est couplé à une pièce de liaison 9 dont la face de contact 11 entoure la surface externe du tube de gainage 10 sur sa partie proche du bouchon 12.

Les ondes ultra-sonores réfléchies sur la face 14 de la cale en plexiglas 9 sont réfléchies vers la surface latérale du tube 10 pour pénétrer dans ce tube avec une incidence voisine de 45°. Les ondes réfléchies par les surfaces interne et externe du tube 10 donnent naissance à des ondes de Lamb se propageant dans la direction axiale du tube et ne subissent aucune réflexion due au bouchon 12 au cours de leur propagation vers l'extrémité opposée du tube de gainage.

Dans le cas des dispositifs représentés aux figures 1 et 2, l'émission d'ondes de Lamb et la propagation de ces ondes vers l'extrémité du tube de gainage opposée à l'extrémité représentée aux figures 1 et 2 donnent naissance à un

echo lorsque ces ondes de Lamb sont réfléchies par le bouchon se trouvant à l'extrémité opposée au bouchon 2 ou au bouchon 12.

Le dispositif émetteur-récepteur 4 ou 8 permet de recueillir le signal écho, d'enregistrer ce signal et de mesurer l'atténuation due au parcours dans le tube.

Dans le cas de tube de gainage de crayons combustibles neufs, l'atténuation est extrêmement faible dans tous les cas où le tube ne renferme aucune humidité, à part évidemment les cas où accidentellement le tube de gainage présente une fissure venant d'un défaut de fabrication et où la soudure entre le tube de gainage et le bouchon sur lequel a lieu la réflexion des ondes est défectueuse.

Dans ces cas particuliers, on peut avoir une idée de l'origine de l'atténuation du signal en analysant le signal reçu pour détecter la présence de signaux parasites.

Si l'atténuation s'accompagne de la présence d'un signal parasite unique on est en présence d'une fissure et l'atténuation est due au moins partiellement à cette fissure.

Si l'on n'enregistre pas la présence de signaux parasites, on est alors en présence d'un défaut de soudure qui est responsable de l'atténuation du signal écho.

Dans le cas de crayons combustibles neufs, ces défauts sont relativement rares et dans la quasi-totalité des cas l'atténuation du signal reçu est due à la présence de traces d'humidité dans le tube.

Cette présence d'humidité dans le tube, sous forme de très fines gouttelettes accrochées à la paroi interne du tube de gainage provoque l'apparition d'une série de signaux parasites caractéristiques de la présence d'eau dans le tube de gainage.

D'autre part l'atténuation du signal permet de connaître la quantité d'eau se trouvant dans le tube lorsqu'on a tracé une courbe telle que celle représentée à la figure 3. Une telle courbe est obtenue en effectuant des mesures d'atténuation sur des tubes de gainage étalon renfermant des quantités dosées d'eau et en les reportant sur un graphique tel que représenté à la figure 3.

On voit sur cette figure 3 qu'il est possible de mesurer des quantités aussi faibles que 6 mg qui correspondraient à une atténuation de l'écho aisément mesurable, de l'ordre de 10 décibels.

Ce résultat se compare très favorablement avec le résultat des méthodes antérieures qui étaient limitées à une sensibilité relativement faible puisqu'on ne pouvait détecter que la présence de quantités d'eau de l'ordre de 50 mg représentant approximativement la quantité d'eau dans une goutte détectable par les méthodes ultra-sonores de l'art antérieur.

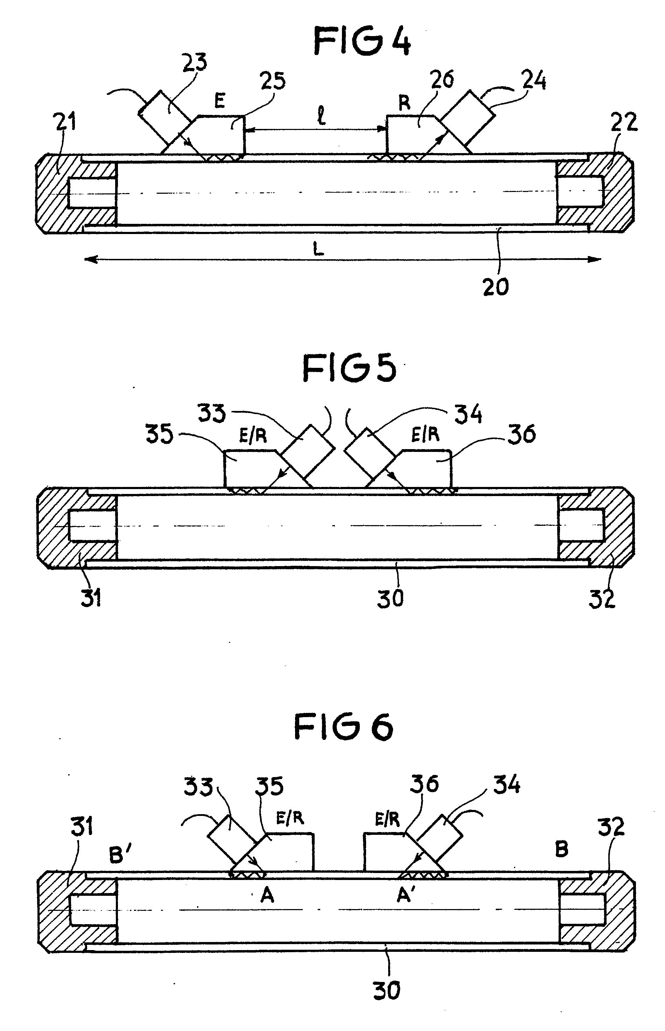

En se reportant à la figure 4, on voit un crayon combustible comportant un tube de gainage 20 et deux bouchons d'extrémité 21 et 22 sur la surface latérale duquel ont été placés deux dispositifs pour l'émission et la réception d'ultra-sons 23 et 24 couplés à des cales en plexiglas 25 et 26 entourant la surface latérale du tube de gainage 20 de crayons combustibles.

Le dispositif 23, 25 est un dispositif émetteur d'ondes ultra-sonores et le dispositif 24, 26 est un dispositif récepteur de ces ondes après un certain parcours de longueur 1 à l'intérieur de la paroi tubulaire de la gaine 20.

La distance 1 entre les deux transducteurs est évidemment inférieure à la longueur du crayon combustible si bien qu'il est possible d'explorer toute la surface du crayon combustible en déplaçant l'ensemble de l'émetteur et du récepteur séparés par une longueur 1.

On peut rendre solidaires l'émetteur et le récepteur d'ultra-sons à l'aide d'un bâti commun qui permet de maintenir l'écartement 1 de ces deux transducteurs.

De la même façon que lors de l'utilisation des dispositifs représentés aux figures 1 et 2, on mesure l'atténuation des ondes de Lamb engendrées dans le tube par les ondes ultra-sonores incidentes avec un angle voisin de 45° par rapport à l'axe du tube, entre l'émetteur et le récepteur d'ultra-sons.

Dans le cas où l'on détecte, pour une position de l'émetteur et du récepteur une atténuation des ondes de Lamb, on peut en déduire la présence d'humidité sur la paroi latérale interne du tube de gainage entre l'émetteur et le récepteur d'ultra-sons.

En déplaçant les dispositifs sur la longueur du crayon combustible, il est facile de comparer les résultats obtenus sur les différentes zones du crayon exploré et de pouvoir comparer ces résultats pour détecter une atténuation anormale des ondes de Lamb due à la présence d'humidité dans le tube.

Ce dispositif et cette méthode d'examen sont particulièrement intéressants lorsque l'on recherche des crayons défectueux pour procéder à leur dégainage et à leur remplacement. En effet, la comparaison des résultats obtenus sur les différentes zones du crayon combustible est immédiate et permet de déterminer très rapidement une anomalie sur la gaine du crayon combustible.

En se reportant à la figure 5, on voit un nouveau mode de réalisation d'un dispositif permettant la mise en œuvre du procédé suivant l'invention où le tube de gainage 30 d'un crayon combustible fermé par deux bouchons 31 et 32 et parcouru par des ondes ultra-sonores dirigées suivant des directions de propagation opposées grâce à deux émetteurs-récepteurs d'ultra-sons 33 et 34 associés à des cales en plexiglas 35 et 36, entourant la surface externe du tube et émettant des ondes ultra-sonores dirigées approximativement à 45° par rapport à l'axe du tube dans des directions symétriques par rapport à un plan transversal du tube.

Ces ondes de Lamb se propageant dans des directions opposées et simultanément sont réfléchies par les bouchons 31 et 32 et reçues en retour par les émetteurs-récepteurs 33 et 34 respectivement.

De cette façon on enregistre simultanément, grâce à un oscillographe à double canal les signaux correspondant à chacune des deux demi-gaines dans lesquelles se propagent les ultra-sons, les dispositifs émetteurs-récepteurs étant disposés approximativement au milieu du tube 30.

De cette façon on peut comparer directement les signaux d'écho obtenus par réflexion sur les bouchons 31 et 32 en amenant en coïncidence ces signaux d'écho de façon à comparer leurs amplitudes.

Il est ainsi extrêmement facile de détecter la présence éventuelle d'eau et de déterminer la demi-gaine affectée par l'humidité.

Cette méthode évite ainsi l'utilisation d'un étalonnage préalable puisqu'elle utilise la comparaison directe des atténuations dans les deux parties de la gaine du crayon combustible dans lesquelles se propagent simultanément les ondes de Lamb.

D'autre part cette méthode a l'avantage d'éliminer l'influence des caractéristiques métallurgiques ou mécaniques du matériau constituant la gaine puisque la comparaison est faite sur deux parties d'un même tube métallique.

Le positionnement précis des capteurs est assuré en observant les signaux d'écho obtenus pour chacun de ces deux capteurs et en déplaçant ces capteurs de façon à amener en coïncidence les signaux d'écho, ce qui permet la comparaison des amplitudes.

Mais il est possible également de perfectionner encore le procédé de contrôle en utilisant le dispositif représenté à la figure 6.

En effet, si l'on intervertit la position des émetteurs-récepteurs 33 et 34 pour obtenir la disposition représentée à la figure 6, les ondes émises par le transducteur 34 dont le parcours dans la gaine tubulaire commence au point A', vont parcourir le tube de gainage suivant le trajet A'BB'A.

Simultanément, les ondes émises par l'émetteur récepteur 33 vont parcourir le trajet AB'BA'.

Chacun de ces parcours représente un trajet total à l'intérieur du tube de gainage identique et comporte des réflexions sur les bouchons 31 et 32, si bien qu'on s'affranchit ainsi des perturbations dues aux hétérogénéités éventuelles du matériau du tube et aux hétérogénéités des soudures des deux bouchons.

On élimine également de ce fait les écarts qui seraient dus à des différences dans la forme des deux bouchons.

En effet, si l'on enregistre sur un oscillographe, simultanément les signaux émis et reçus par les deux émetteurs-récepteurs, dans le cas où le tube ne contient aucune trace d'eau, les deux enregistrements sont strictement identiques puisque les deux voies de parcours sont également identiques.

Par contre, dans le cas où il existe des traces d'eau sur la surface intérieure du tube de gainage, les signaux parasites dus à cette eau se trouvent décalés par rapport aux signaux d'écho sur l'un et l'autre enregistrement. En même temps, les signaux d'écho sont atténués ce qui permet, comme précédemment, de déterminer les quantités d'eau sur la surface interne du tube de gainage. On obtient évidemment deux valeurs de l'atténuation qui doivent être identiques pour l'une et l'autre voie de mesure.

Dans tous les cas, on voit que le procédé suivant l'invention permet de détecter et de déterminer quantitativement de très faibles traces d'eau à l'intérieur d'un tube de gainage d'un crayon combustible neuf par une mesure utilisant la propagation d'ondes ultra-sonores dans la paroi latérale du tube.

On voit également que le procédé suivant l'invention permet de distinguer facilement les défauts physiques du crayon combustible (fissures ou défauts de soudage des bouchons) des traces d'humidité, en observant les signaux captés après un certain parcours dans la paroi du tube.

Le procédé suivant l'invention permet évidemment d'éliminer également les tubes de gainage qui comportent des défauts tels que fissures ou défauts de soudure des bouchons.

Enfin, des mesures comparatives sur différentes portions du tube de gainage permettent des déterminations très rapides de la présence d'humidité sur ces portions de tube.

Mais l'invention ne se limite pas aux modes de réalisation qui viennent d'être décrits, elle en comporte au contraire toutes les variantes et il est possible d'imaginer des modifications de points de détail sans pour autant sortir du cadre de l'invention.

C'est ainsi qu'il est possible d'utiliser des cales en un matériau différent du plexiglas, l'angle d'incidence optimal des ondes pouvant cependant varier en fonction du matériau choisi.

La fréquence des ondes émises peut varier dans une large mesure, cependant les essais de la demanderesse ont montré que les fréquences optimales de ces ondes sont inférieures à 1 MHz.

On a décrit quelques dispositions des émetteurs ou des émetteurs-récepteurs sur la surface latérale du tube de gainage ; cependant on peut imaginer d'autres dispositifs et d'autres types de mesures comparatives que celles qui ont été décrites, en imaginant des parcours des ondes de Lamb dans la paroi du tube de gainage plus ou moins complexes, avec ou sans réflexion sur les bouchons d'extrémité du crayon combustible ou sur d'autres dispositifs de réflexion.

De plus, le procédé suivant l'invention et les dispositifs correspondants sont applicables non seulement dans le cas des crayons combustibles pour les assemblages destinés à être placés dans le cœur des réacteurs nucléaires à eau pressurisée mais également à tout type de · crayons combustibles comportant un tube de gainage fermé de façon étanche par des bouchons.

Enfin, les types de capteurs décrits aux figures 4 à 6 peuvent être avantageusement remplacés par une structure de capteur annulaire entourant entièrement le tube, comme cela est montré à la figure 2.

## Revendications

1. Procédé de contrôle de crayons combustibles neufs destinés à des assemblages pour réacteur nucléaire, obtenus par introduction du combustible dans une gaine tubulaire, remplissage par du gaz sous pression et obturation de cette gaine par des bouchons fixés de façon étanche à la gaine constituant les extrémités du crayon combustible, pour déceler des traces d'humidité introduites éventuellement dans le crayon pendant sa fabrication, caractérisé par le fait qu'on émet dans le tube de gainage (1) de l'élément combustible disposé à l'air libre, des ondes ultra-sonores avec une incidence oblique par rapport à l'axe du tube, à partir d'une zone de la paroi latérale du tube, ces ondes produisant, par réflexion sur les parois du tube de gainage (1), des ondes de plaques ou ondes de Lamb, qu'on capte ces ondes de Lamb après un certain parcours suivant la longueur du tube de gainage et qu'on mesure l'atténuation subie par ces ondes de Lamb pour en déduire, par comparaison avec des résultats d'atténuation obtenus sur une autre partie de la longueur du tube ou sur un tube étalon, une information sur la présence éventuelle d'humidité dans le crayon combustible.

2. Procédé de contrôle suivant la revendication 1, caractérisé par le fait qu'on enregistre les signaux transmis de façon à déterminer la présence éventuelle de signaux parasites représentatifs de la présence de fissures ou de traces d'eau.

3. Procédé de contrôle suivant l'une quelconque des revendications 1 et 2, caractérisé par le fait qu'on compare l'atténuation mesurée à des atténuations mesurées dans des conditions semblables sur des tubes renfermant des quantités connues d'humidité de façon à connaître la quantité d'eau renfermée dans le tube.

4. Procédé de contrôle suivant l'une quelconque des revendications 1, 2 et 3, caractérisé par le fait que le parcours des ondes dans le tube se fait dans un sens entre le point d'incidence et l'un des bouchons (31, 32) du crayon combustible avec retour dans l'autre sens et réception des ondes au niveau du point d'incidence, après réflexion sur le bouchon du crayon combustible.

5. Procédé de contrôle suivant l'une quelconque des revendications 1, 2, et 3 caractérisé par le fait que le parcours des ondes se fait entre deux points (AA') de la surface latérale de l'élément combustible (30) dans un sens uniquement, l'émission des ondes ultra-sonores se faisant en l'un des points et la réception à l'autre point.

6. Procédé de contrôle suivant l'une quelconque des revendications 1, 2 et 3, caractérisé par le fait que l'émission des ondes ultra-sonores se fait simultanément en deux points différents (AA') de la surface latérale de la gaine du crayon combustible (30) avec propagation des ondes ultra-sonores vers les bouchons d'extrémité (31, 32) du crayon combustible et retour dans l'autre sens des ondes ultra-sonores jusqu'au point d'où elles ont été émises, les atténuations du signal après traversée du tube suivant chacun des deux parcours étant comparées pour déterminer la présence de traces d'humidité.

7. Procédé de contrôle suivant l'une quelconque des revendications 1, 2 et 3, caractérisé par le fait que les ondes ultra-sonores sont émises simultanément en deux points différents (AA') de la surface latérale du crayon combustible (30) dans des sens de déplacement opposés, qu'elles se réfléchissent sur les deux bouchons (31, 32) du crayon combustible successivement avant d'être captées pour chacun des trains d'ondes au point où l'autre train d'ondes a été émis.

8. Dispositif pour la mise en œuvre du procédé suivant l'une quelconque des revendications précédentes, caractérisé par le fait qu'il comporte au moins un transducteur (4) accolé sur sa face d'émission ou de réception à une cale (5) en un matériau permettant le guidage des ondes ultra-sonores, en contact avec la surface extérieure de la gaine (9) du crayon combustible, pour ajuster l'incidence des ondes ultra-sonores au moment où elles entrent dans la gaine du crayon combustible et un oscillographe relié au transducteur pour l'enregistrement des signaux émis et reçus par le transducteur.

## Claims

1. Method for checking new fuel rods to be used in nuclear reactor assemblies, obtained by introducing fuel into a tubular sheath, carrying out filling with a gas under pressure and closing off this sheath using end closure members which are fixed in a sealed fashion to the portion of the sheath constituting the ends of the fuel rods, in order to reveal the presence of traces of humidity which have been introduced into the fuel rod during manufacture, characterized by the fact that ultrasonic waves are fed into the tubular sheath body 1 of the fuel element disposed in free air, said waves being incident obliquely with respect to the axis of the tubular sheath, from a region of the lateral walls of the tubular sheath, the waves producing, upon reflection at the walls of the tubular sheath 1, plate waves or Lamb waves, these Lamb waves being detected after a certain path of travel along the length of the tubular sheath, the attenuation to which these Lamb waves are subject being measured in order to deduce therefrom, using comparison with results for attenuation obtained at another portion of the length of the tube or obtained from a reference tube, information concerning the possible presence of humidity in the fuel rod.

2. Checking method in accordance with claim 1, characterized by the fact that the signals transmitted are recorded in order to determine the possible presence of parasite signals representative of the presence of cracks or traces of water.

3. Checking method in accordance with any one of claims 1 and 2, characterized by the fact that the attenuation measured is compared with attenuations measured under similar conditions on tubes containing known amounts of humidity in order to ascertain the amount of water contained in the tube.

4. Checking method in accordance with any one of claims 1, 2 and 3, characterized by the fact that the path of travel of the waves in the tube occurs in one direction between the point of incidence and one of the end closure members (31, 32) of the fuel rod together with return travel in the other direction and reception of the waves at the position of the point of incidence after reflection at the end closure member of the fuel rod.

5. Checking method in accordance with any one of claims 1, 2 and 3, characterized by the fact that travel of the waves occurs between two points (AA') of the lateral surface of the fuel element (30) in one direction only, transmission of the ultrasonic waves taking place at one of the points and reception at the other point.

6. Checking method in accordance with any one of claims 1, 2 and 3, characterized by the fact that transmission of the ultrasonic waves takes place simultaneously at two different points (AA') of the lateral surface of the sheath of the fuel rod (30), propagation of the ultrasonic waves towards the end closure members (31, 32) of the fuel rod taking place along with return in the other direction of the ultrasonic waves to the point from which they were sent, the attenuations of the signal after passing along the tube in accordance with each one of the two paths being compared in order to determine the presence of traces of humidity.

7. Checking method in accordance with any one of claims 1, 2 and 3, characterized by the fact that the ultrasonic waves are sent simultaneously at two different points (AA') of the lateral surface of the fuel rod (30) in opposing directions of displacement, the waves being reflected at the two end closure members (31, 32) of the fuel rod successively prior to sensing of each one of the series of waves being carried out at the point where the other series of waves was transmitted.

8. Device for carrying out the method in accordance with any one of the preceding claims, characterized by the fact that it includes at least one transducer (4) having its transmission or receiving face affixed to a wedge-shaped member (5) in a material allowing guiding of the ultrasonic waves to occur which is in contact with the outer surface of the sheath (9) of the fuel rod, in order to adjust the incidence of the ultrasonic waves at the time when they are entering the sheath of the fuel rod, and an oscillograph connected to the transducer for recording the signals sent and received by the transducer.

**Ansprüche**

1. Verfahren zum Prüfen von neuen Brennstoffelementen für Brennstoffelementbündel eines Kernreaktors, die durch Einführen des Brennstoffelementes in ein Hüllrohr, Auffüllen mit Druckgas und Verschließen dieser Umhüllung mittels die Brennstabenden bildenden an der Hülle dichtfest befestigten Stopfen erzielt werden, um bei der Herstellung evtl. in das Brennstoffelement eingebrachten Feuchtigkeitsspuren festzustellen, dadurch gekennzeichnet, daß von einem Feld der Hüllrohrseitenwand aus Ultraschallwellen mit einem zur Rohrachse schrägen Einfallwinkel in das im Freien angeordnete Hüllrohr (1) des Brennstoffelementes eingestrahlt werden, wobei diese Wellen durch Rückstrahlung an den Wänden des Hüllrohres (1) Plattenwellen oder Lambwellen erzeugen, daß diese Lambwellen nach einer gewissen Wegstrecke entlang des Hüllrohres aufgenommen werden, und daß die Dämpfung dieser Lambwellen gemessen wird, um durch Vergleich mit an einem anderen Teil der Hüllrohrlänge oder an einem geeichten Hüllrohr erzielten Dämpfungsergebnisse, Angaben über die evtl. vorhandene Feuchtigkeit in dem Brennstoffelement abzuleiten.

2. Verfahren nach Anspruch 1, dadurch gekennzeichnet, daß die übertragenen Signale registriert werden um evtl. vorhandene für die Anwesenheit von Rissen oder Wasserspuren typischen Störsignale zu ermitteln.

3. Verfahren nach einem der Ansprüche 1 und 2, dadurch gekennzeichnet, daß die gemessene Dämpfung mit den unter ähnlichen Bedingungen an Hüllrohren gemessenen Dämpfungen, die bekannte Wassermengen enthalten, verglichen wird um die im Hüllrohr enthaltene Wassermenge zu ermitteln.

4. Verfahren nach einem der Ansprüche 1, 2 und 3, dadurch gekennzeichnet, daß die Wellen von dem Einfallspunkt zu einem der Brennstoffelementstopfen (31, 32) in eine Richtung und nach Rückstrahlung auf dem Brennstoffelementstopfen zurück in die andere Richtung verlaufen und die Wellen in der Höhe des Einfallspunktes aufgenommen werden.

5. Verfahren nach einem der Ansprüche 1, 2 und 3, dadurch gekennzeichnet, daß die Wellen zwischen zwei Punkte (AA') der Seitenfläche des Brennstoffelementes (30) nur in eine Richtung verlaufen, wobei die Ultraschallwellen an einem der beiden Punkte ausgestrahlt und am anderen Punkt aufgenommen werden.

6. Verfahren nach einem der Ansprüche 1, 2 und 3, dadurch gekennzeichnet, daß die Ultraschallwellen gleichzeitig von zwei unterschiedlichen Punkten (AA') der Seitenfläche der Brennstoffelementhülle (30) ausgestrahlt werden und sich die Ultraschallwellen zu den Brennstoffelementendstopfen (31, 32) hin und zurück in die andere Richtung bis zu dem jeweiligen Ausstrahlungspunkt ausbreiten, wobei die Signaldämpfungen nach dem Durchlaufen des Hüllrohres gemäß der jeweiligen Wegstrecke verglichen werden um die Anwesenheit von Feuchtigkeitsspuren festzustellen.

7. Verfahren nach einem der Ansprüche 1, 2 und 3, dadurch gekennzeichnet, daß die Ultraschallwellen gleichzeitig von zwei unterschiedlichen Punkten (AA') der Seitenfläche des Brennstoffelementes (30) in entgegengesetze Richtungen ausgestrahlt werden, daß sie an den beiden Brennstoffelementstopfen (31, 32) nacheinander reflektiert werden bevor der jeweilige Wellenzug an dem Punkt aufgenommen wird, wo der andere Wellenzug ausgestrahlt wurde.

8. Vorrichtung zur Anwendung des Verfahrens nach einem der vorhergehenden Ansprüche, dadurch gekennzeichnet, daß sie mindestens ein Ultraschallschwinger (4) aufweist, welcher sende- oder aufnahmeseitig mit einem Keil (5) aus einem Werkstoff zur Führung der Ultraschallwellen gekoppelt ist, das mit der Aussenseite der Brennstoffelementhülle (9) in Verbindung steht um den Einfall der Ultraschallwellen bei deren Eindringen in die Brennstoffelementhülle einzustellen, und ein mit dem Ultraschallschwinger verbundenen Oszillograph umfasst um die durch den Ultraschallschwinger ausgestrahlten und aufgenommenen Signale zu registrieren.

0 018 290

FIG1

FIG2

FIG3

# FIG 4

# FIG 5

# FIG 6